# EUROPEAN PATENT SPECIFICATION

(11) **EP 3 142 902 B1**
(45) Date of publication and mention of the grant of the patent: **10.02.2021**
(21) Application number: 15793397.9
(22) Date of filing: 30.04.2015
(51) Int. Cl.: B60R 16/02, B60K 35/00, G02B 27/01, G06F 3/048, G06F 3/01

(54) **DISPLAY DEVICE AND VEHICLE**
ANZEIGEVORRICHTUNG UND FAHRZEUG
DISPOSITIF D'AFFICHAGE ET VEHICULE

(30) Priority: 16.05.2014 JP 2014102093; 24.03.2015 JP 2015061053
(43) Date of publication of application: 22.03.2017
(73) Proprietor: Ricoh Company, Ltd., Tokyo 143-8555 (JP)
(72) Inventor: YOKOTA, Soichiro, Tokyo 143-8555 (JP); SAISHO, Kenichiroh, Tokyo 143-8555 (JP); YOSHIKAWA, Hiromi, Tokyo 143-8555 (JP); ISHIGAKI, Tomoko, Tokyo 143-8555 (JP); SAKOH, Fumiko, Tokyo 143-8555 (JP)
(74) Representative: J A Kemp LLP
(86) International application number: PCT/JP2015/063539
(87) International publication number: WO 2015/174383

(56) References cited:
- EP-A1- 2 570 843
- WO-A1-2014/068892
- WO-A2-2008/052178
- GB-A- 2 284 582
- JP-A- 2005 338 934
- JP-A- 2007 145 310
- JP-A- 2010 113 494
- JP-A- 2011 116 219
- JP-A- 2013 130 832
- US-A- 5 931 572
- US-A1- 2004 056 954
- US-A1- 2012 072 097
- US-A1- 2012 139 816

## Description

The present invention relates to a display device and a vehicle including the display device.

As a new vehicle safety technology, technology has been developed for a display device that uses a stereo camera and/or a heads-up display (which may be referred to as "HuD," hereinafter). This technology is a combination of stereo camera technology for measuring a distance and HuD technology for directly projecting an image on driver's view. The market expects that video experiences with "Augmented Reality (AR)" can be achieved. In the market, technology has been developed to achieve autonomous driving, and it is expected that, by the year 2020, a partially autonomous driving vehicle will appear on the market.

The current HuD technology may be appreciated for providing safe driving by reducing eye movement during manual driving. It is highly controversial as to how the human behavior inside a vehicle will be changed, or how an interior of a vehicle will be changed in a society in which the above-described autonomous driving becomes common. While it is highly controversial, it is expected that, at least, a function will be necessary which is for notifying passengers of the "the current surrounding conditions of their own vehicle."

When a child is riding on a vehicle with a parent who is driving the vehicle, such as a case where a child is riding in a child safety seat that is installed in a front seat or a rear seat of the vehicle, it is likely that the driver is distracted and glances at the child to confirm safety of the child.

When a driver faces a passenger, a visual field can be significantly shifted, and the visual field can be deviated from the traveling direction of the vehicle. Such a situation may not be suitable for traffic safety. Even if a driver does not face a passenger, when the driver utilizes, for example, a navigation device, the driver's line of sight may be deviated from the traveling direction of the vehicle, thereby lowering safety.

There is a need for a display device or the like with which, while preventing deterioration in safety, a driver can confirm a situation of a passenger.

US2004/056954 A1 (CRANDALL JOHN CHRISTOPHER [US] ET AL) 25 March 2004 (2004-03-25), discloses a rear seat monitor for a vehicle. The vehicle monitoring system includes a camera to capture the image of the vehicle rear seat and its occupants, for example a baby/infant/child in a car seat, and a triggering system to enable the capturing and displaying of the images. The triggering system could be based on motion sensors, which could be image based, or sound sensors. The display includes a HUD.

WO 2008/052178 A2 (JOHNSON CONTROLS TECH CO [US] CHUTORASH RICHARD J [US]; SIMS MICHAEL) 2 May 2008 (2008-05-02), discloses background information;

WO 2014/068892 A1 (DENSO CORP [JP]) 8 May 2014 (2014-05-08), discloses a passenger monitoring device to monitor the status of the driver and the passengers of a vehicle. The monitoring is performed by video with an image capture device. The status of the monitored occupant is derived from the acquired images and a display, that could be a HUD, shows the condition of the passengers.

According to a first aspect of the invention, there is provided a display device as defined in claim 1.

According to a second aspect of the invention, there is provided a vehicle as set out in claim 12.

According to an embodiment of the present invention, a display device or the like can be provided with which, while preventing deterioration in safety, a driver can confirm a situation of a passenger.

### BRIEF DESCRIPTION OF THE DRAWINGS

FIG. 1 is a diagram illustrating an example of a display device according to an embodiment;
FIG. 2 is a diagram illustrating an example of an image display unit according to the embodiment;
FIG. 3 is a diagram illustrating an example of operation of the display device according to the embodiment;
FIG. 4 is a diagram illustrating an example of a hardware configuration for a case in which a driver image capture unit is a stereo camera;
FIG. 5 is a flowchart showing an example of a flow to determine whether an image is displayed; and
FIG. 6 is a diagram showing an example of an image that is displayed by the display device according to the embodiment.

An embodiment of the present invention is explained below by referring to the accompanying drawings. In the drawings, an identical reference numeral may be attached to the same components, and thereby duplicate explanation may be omitted.

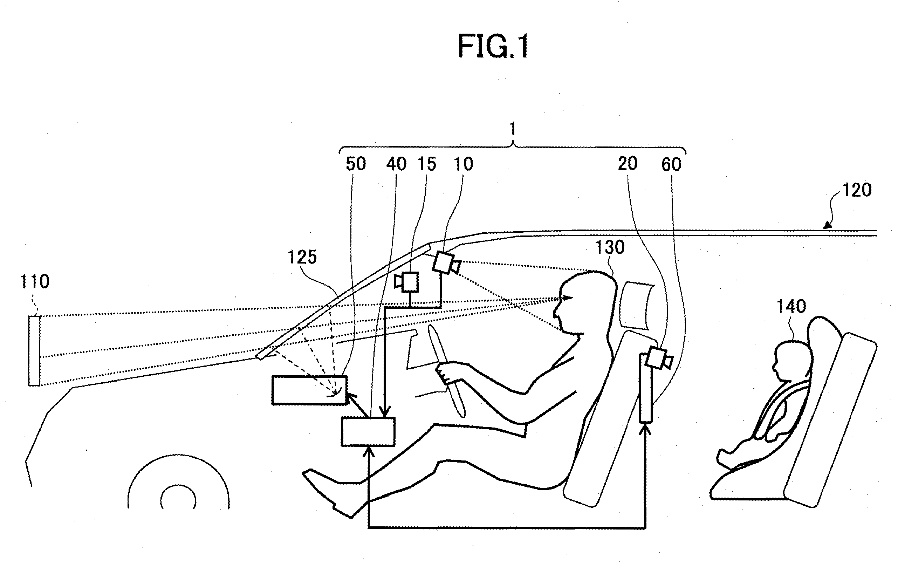

FIG. 1 is a diagram exemplifying a display device 1 according to an embodiment of the present invention. As shown in FIG. 1, the display device 1 is included in a vehicle 120. The display device 1 may include a driver image capture unit 10; a forward image capture unit 15; a passenger image capture unit 20; an image processing unit 40; an image display unit 50; and a passenger display 60, for example. Note that the driver image capture unit 10, the forward image capture unit 15 and the passenger display 60 can be optional components of the display device 1, and they may not be essential components of the display device 1. The embodiment is explained by exemplifying a car. However, the embodiment is not limited to this, and the display device 1 according to the embodiment can be included in an airplane, a ship, or robot, for example. Note that, in this specification, a "vehicle" may refer to a car, an airplane, a ship, or a robot, for example.

The driver image capture unit 10 may include a function for capturing an image of a driver 130 so as to determine a condition of the driver 130 of the vehicle 120. As the driver image capture unit 10, a monocular camera or a binocular camera (a stereo camera) may be used, for example. The driver image capture unit 10 can be arranged so that the driver image capture unit 10 can capture images in the vicinity of both eyes of the driver 130 as an angle of view. The driver image capture unit 10 may be arranged at any position in the vehicle 120 in accordance with interior design of the vehicle 120. For example, the drive image capture unit 10 may be arranged at a ceiling portion of the vehicle 120. Alternatively or additionally, the driver image capture unit 10 may be arranged at a top of a dashboard of the vehicle 120, for example.

The forward image capture unit 15 may include a function for capturing an image in front of the vehicle 120 so as to determine presence or absence of an object of which the driver 130 needs to be alerted to in front of the vehicle 120 (e.g., a preceding vehicle, or a pedestrian), and/or a distance between the vehicle 120 and a preceding vehicle. For the forward image capture unit 15, a monocular camera or a binocular camera (a stereo camera) may be used, for example. The forward image capture unit 15 may be arranged at any position in the vehicle 120 in accordance with interior design of the vehicle 120. For example, the forward image capture unit 15 may be arranged at a ceiling portion of the vehicle 120. Alternatively or additionally, the forward image capture unit 15 may be arranged at a top of a dashboard of the vehicle 120.

The passenger image capture unit 20 includes a function for capturing an image of the passenger 140 so as to determine a condition of the passenger 140 that is riding in the vehicle 120 together with the driver 130. As the passenger image capture unit 20, a monocular camera or a binocular camera (a stereo camera) may be used, for example. The passenger image capture unit 20 may be arranged at any position in the vehicle 120 in accordance with interior design of the vehicle 120. For example, the passenger image capture unit 20 may be arranged at a rear upper portion of a front seat of the vehicle 120. Alternatively or additionally, the passenger image capture unit 20 may be arranged at a ceiling portion of the vehicle 120.

The passenger image capture unit 20 may preferably have an angle of view that is wider than that of the driver image capture unit 10. Namely, the passenger image capture unit 20 may preferably be arranged, so that the whole body of the passenger 140 can be captured within the angle of view of the passenger image capture unit 20. That is because the passenger image capture unit 20 may be required to determine various conditions of the passenger 140. For example, when three passengers can be accommodated in a rear seat, the passenger image capture unit 20 may preferably have an angle of view that is wide enough to capture conditions of all three passengers.

Additionally, a plurality of image capture units may be arrange in the vehicle 120 as the passenger image capture unit 20. For example, the image capture units may be arranged so as to ensure that an image of the whole of the rear seat can be captured. Additionally, an image capture unit that is different from the image capture unit for the rear seat may be provided so as to determine a condition of a passenger in a front passenger seat. An example of a position of the image capture unit that is for determining the condition of the passenger in the front passenger seat may be a position above a dashboard at the side of the front passenger seat.

The passenger 140 can be a child who is sitting in a child safety seat, for example. However, the embodiment is not limited to this. For example, the passenger 140 may be an adult who is sitting on the rear seat of the vehicle 120. Alternatively, the passenger 140 may be sitting on the front passenger seat, instead of the rear seat.

The image processing unit 40 may include a function for generating a superimposition image based on information that is obtained from the driver image capture unit 10 and the passenger image capture unit 20, and for outputting the superposition image on the display unit 50. The image processing unit 40 may be arranged at any position within the vehicle 120. The image processing unit 40 may have a configuration that includes a central processing unit (CPU); a read-only memory (ROM); and a main memory, for example.

In this case, various functions of the image processing unit 40 can be implemented by reading out a program that is stored in the ROM or the like onto the main memory and executing the program by the CPU. Note that a part of or all the image processing unit 40 may be implemented only by hardware. Additionally, the image processing unit 40 may physically include a plurality of devices.

The image display unit 50 is a so-called "heads-up display" that includes a function to display, in the vehicle 120, the image that is generated by the image processing unit 40 as a virtual image that is superimposed onto the view of the driver 130. The image display unit 50 may be arranged at any position in the vehicle 120 in accordance with interior design of the vehicle 120. For example, the image display unit 50 may be arranged at a position above the dashboard in the vehicle 120. Alternatively, the image display unit 50 may be embedded in the dashboard.

More specifically, the image display unit 50 can enlarge, by using a mirror, a lens, and/or the like, an intermediate image that is internally generated, and the image display unit 50 can display the enlarged image as a virtual image. The image display unit 50 can display the virtual image such that the driver 130 can view the virtual image with a feeling as if the virtual image were separated from a visual point of the driver 130 by a predetermined distance. The image display unit 50 may be implemented as a panel projection type display, or a laser scanning type display, for example. The image display unit 50 may be any type of these displays. The laser scanning type display may be preferable to use in this embodiment because the laser scanning type display may allow widening of an angle of view of the virtual image, and the laser scanning type display may display a high brightness image that is robust against external light. In the following explanation, a laser scanning type display is used as an example of the image display unit 50.

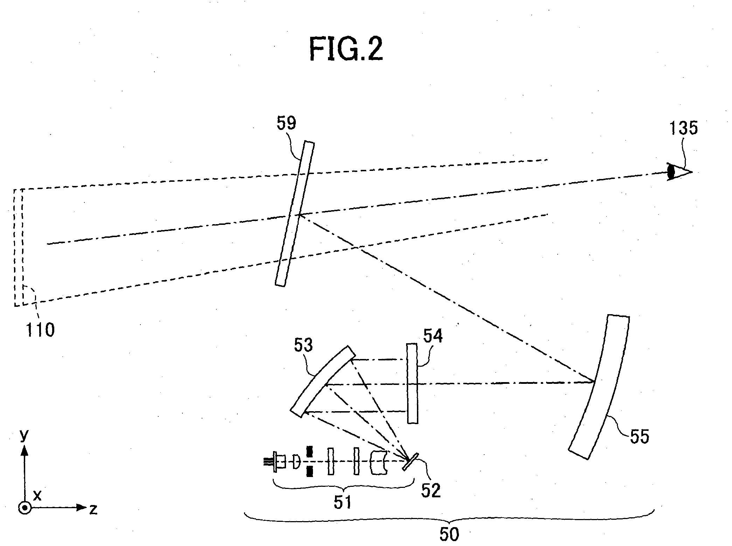

FIG. 2 is a diagram exemplifying the image display unit 50 according to the embodiment. As shown in FIG. 2, the image display unit 50 may include, at least, a light source 51; an optical deflector 52; a first mirror 53; a scanned surface 54; and a second mirror 55. In FIG. 2, the numerical reference 135 shows an eyeball of the driver 130 (which is referred to as the "eyeball 135," hereinafter), and the reference numeral 110 shows the virtual image (which is referred to as the "virtual image 110," hereinafter).

The light source 51 may include three laser light sources that correspond to "R," "G" and "B," respectively; a coupling lens; an aperture; a synthetic optical element; and a lens, for example. Laser beams that are emitted from the three laser light sources, respectively, are synthesized, and the synthesized light beam is guided toward a reflection surface of the optical deflector 52. The laser beam that is guided toward the reflection surface of the optical deflector 52 is two-dimensionally deflected by the optical deflector 52.

As an example of the optical deflector 52, one micromirror may be used that fluctuates with respect to two perpendicular axes. Alternatively, two micromirrors may be used each of which fluctuates or pivots with respect to one axis. The optical deflector 52 may be Micro Electro Mechanical Systems (MEMS) that can be produced by semiconductor processing. For example, the optical deflector 52 can be driven by an actuator that utilizes deformation force of a piezoelectric element as the driving force.

A light beam bundle that is two-dimensionally deflected by the optical deflector 52 enters the first mirror 53, and the light beam is reflected by the first mirror 53, and thereby a two-dimensional image is rendered on the scanned surface 54. As an example of the first mirror 53, a concave mirror may be used. A reflection surface of the first mirror 53 may be an anamorphic mirror, for example. Namely, the reflection surface of the first mirror 53 may be such that a curvature in a predetermined direction is different from a curvature in the direction that is perpendicular to the predetermined direction. When the reflection surface of the first mirror 53 is an anamorphic mirror, a curved surface shape of the reflection surface can be adjusted, and aberration correction performance can be enhanced.

The scanned surface 54 can be a transparent surface on which a two-dimensional image is formed by a light beam bundle that is reflected on the first mirror 53 and enters the scanned surface 54. The scanned surface 54 has a function to diverge a synthesized laser beam at a desired divergence angle. For example, the scanned surface 54 may preferably have a micro-lens array structure. The light beam bundle that is emitted from the scanned surface 54 is enlarged and displayed by the second mirror 55 and a semi-transparent mirror 59. For the second mirror 55, a concave mirror can be used, for example. The image display unit 50 may include a transmission type optical element, such as a lens or a prism.

The semi-transparent mirror 59 can be a mirror whose transmittance in a visible region is 10 to 70%. On one side of the semi-transparent mirror 59 onto which the light beam bundle that is reflected by the second mirror 55 is incident, the semi-transparent mirror 59 has a reflection surface on which a dielectric multilayer film or a wired grid is formed, for example. The reflection surface of the semi-transparent mirror 59 may be a mirror surface such that a light beam bundle that is emitted by a laser and that is within a predetermined wavelength range is selectively reflected. Namely, the reflection surface of the semi-transparent mirror 59 may be a reflection surface that is formed so that a reflection coefficient is increased for a light beam bundle having reflection peaks or reflection bandwidths that include light beams emitted from three lasers corresponding to "R," "G" and "B." Alternatively or additionally, the reflection surface of the semi-transparent mirror 59 may be a reflection surface that is formed so that a reflection coefficient is increased for a light beam bundle in a specific deflection direction.

For example, the semi-transparent mirror 59 can be integrated with a front windshield 125 (cf. FIG. 1) of the vehicle 120. By providing the image display unit 50 in front of the driver 130 in the vehicle, a light beam bundle that is reflected by the reflection surface of the semi-transparent mirror 59 can enter the eyeball 135 of the driver 130 in a driver's seat. Then, a two-dimensional image of the scanned surface 54 can be viewed by the driver 130 as an enlarged virtual image 110 at a predetermined position that is a forward position relative to the position of the reflection surface of the semi-transparent mirror 59. Namely, by the image display unit 50, a so-called "heads-up display" can be achieved.

Referring to FIG. 1, the passenger display 60 may have a function for displaying an image that is captured by the driver image capture unit 10. The passenger display 60 can be arranged at any position in the vehicle 120 in accordance with the interior design of the vehicle 120, provided that an image on the passenger display 60 can be viewed by the passenger 140. For example, the passenger display 60 may be arranged at a rear upper portion of the front seat of the vehicle 120.

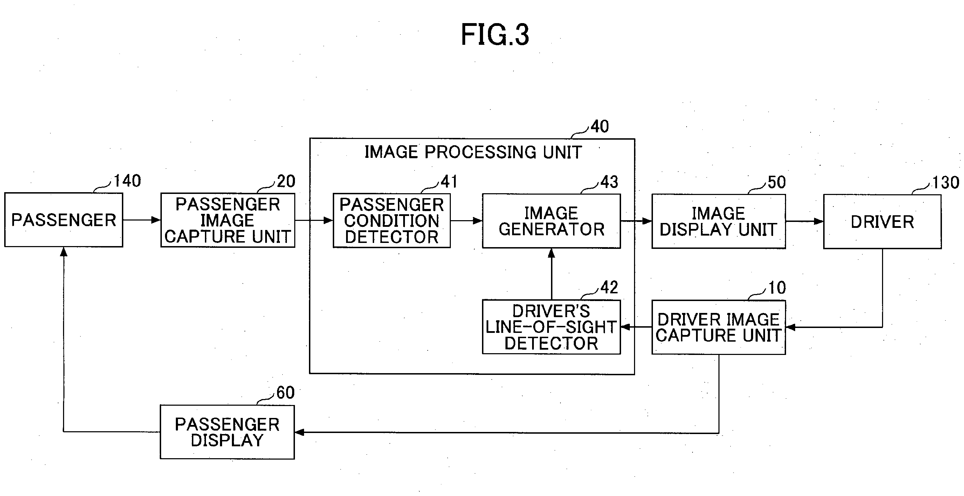

Next, there is explained, by referring to FIG. 3, an example of an algorithm for processing information that is obtained by the image processing unit 40 from the driver image capture unit 10 and the passenger image capture unit 20.

Optical information that is obtained from the driver image capture unit 10 is transmitted to a driver's line-of-sight detector 42 of the image processing unit 40. The driver's line-of-sight detector 42 can detect a direction of the line of sight of the driver 130 based on the optical information that is captured by the driver image capture unit 10. Specifically, when the image information of the eyes is to be used, for example, a method can be used that is for detecting a direction of the line of sight by tracking the movement of the pupils. Alternatively or additionally, when the image information of the face is to be used, a method can be used that is for detecting a direction of the line of sight by recognizing characteristic image areas of the face (e.g., the eyes, the mouth, and/or the nose), or a method can be used that is for detecting a direction of the line of sight from facial contour information. The direction of the line of sight of the driver 130 that is detected by the driver's line-of-sight detector 42 is transmitted to an image generator 43.

The optical information that is obtained by the passenger image capture unit 20 is transmitted to a passenger condition detector 41. Additionally, the optical information that is obtained by the passenger image capture unit 20 is transmitted to the image generator 43 of the image processing unit 40 via the passenger condition detector 41 of the image processing unit 40. The passenger condition detector 41 can detect, based on the optical information that is captured by the passenger capture unit 20, a condition of the passenger 140 (e.g., a degree of fatigue, or a degree of excitement) by image recognition, for example.

Specifically, for example, the face of the passenger 140 is recognized and images corresponding to the areas of the eyes are extracted. From time-dependent variation of the extracted image, opening and closing of the eyelids are detected, thereby calculating blinking time (for example, a time period, per blink, within which it can be recognized that the eyes are closed) of the passenger 140. Then, by comparing the current blinking time with the normal blinking time, the degree of fatigue of the passenger 140 (e.g., a high degree of drowsiness) can be detected. Additionally or alternatively, by recognizing movement of arms and/or legs of the passenger 140, and by comparing the recognized movement of the arms and/or legs with the normal movement of the arms and/or legs, the degree of excitement of the passenger 140 (e.g., being irritated) can be detected. The condition of the passenger 140 that is detected by the passenger condition detector 41 is transmitted to the image generator 43 of the image processing unit 40.

Note that as a normal condition of the passenger 140, a condition of the passenger 140 at the start of the driving can be used, or a value that is estimated from past history or the like can be used. Alternatively or additionally, data of a normal condition can be stored, for example, in a ROM, in advance.

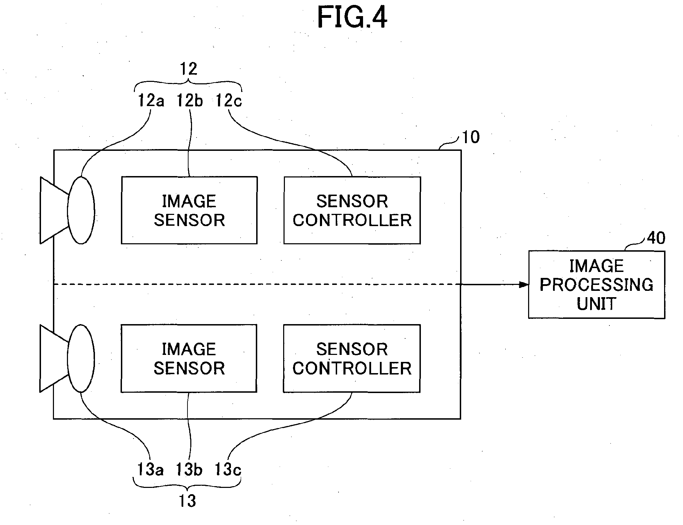

FIG. 4 is a diagram exemplifying a hardware configuration when the driver image capture unit 10 is a stereo camera. When the driver image capture unit 10 is a stereo camera, the driver image capture unit 10 may include a first camera unit 12 and a second camera unit 13. One of the first camera unit 12 and the second camera unit 13 is for the left eye, and the other is for the right eye. When the first camera unit 12 and the second camera unit 13 are arranged in parallel, depth information of a captured object can be obtained by utilizing disparity information between the first camera unit 12 and the second camera unit 13. Namely, three-dimensional information of the captured object can be obtained.

The first camera unit 12 and the second camera unit 13 are arranged substantially parallel to each other, for example. The first camera unit 12 may include a lens 12a; an image sensor 12b; and a sensor controller 12c. Similarly, the second camera unit 13 may include a lens 13a; an image sensor 13b; and a sensor controller 13c.

For each of the image sensors 12b and 13b, an image sensor, such as a charge coupled device (CCD) or a complementary material oxide semiconductor device (CMOS), can be used. The sensor controller 12c may include functions for executing exposure control of the image sensor 12b; image reading control; communication with an external circuit; and image data transmission control. Similarly, the sensor controller 13c may include functions for executing exposure control of the image sensor 13b; image reading control; communication with an external circuit; and image data transmission control. Each of the sensor controllers 12c and 13c may include a CPU; a ROM; and so forth.

The driver image capture unit 10 can be connected to the image processing unit 40 through a data bus line or a serial bus line, for example. The image processing unit 40 can generate a brightness image and a disparity image based on optical information that is obtained from the driver image capture unit 10. Additionally, the image processing unit 40 can recognize an object by executing various processes, such as a context recognition process.

A portion of or all the functions of the image processing unit 40 may be included in the driver image capture unit 10. Namely, a configuration can be used such that, for the driver image capture unit 10, a CPU and the like are provided in the same housing, and thereby image processing can be executed. Note that when the forward image capture unit 15 is a stereo camera, a hardware configuration that is the same as that of FIG. 4 can be used. Similarly, when the passenger image capture unit 20 is a stereo camera, a hardware configuration that is the same as that of FIG. 4 can be used.

Referring to FIG. 3 again, the image generator 43 of the image processing unit 40 can generate an image that shows a condition of the passenger 140, and the image generator 43 can transmit the generated image to the image display unit 50. The image display unit 50 can display an image that is generated by the image generator 43 while superimposing the image with a view of the driver 130.

When the image generator 43 can recognize that the passenger 140 is sleepy, for example, by the information from the passenger condition detector 41, the image generator 43 can generate an image that is obtained by adding a text, "sleepy," to an image of the passenger 140 that is captured by the passenger image capture unit 20, and the image generator 43 can transmit the generated image to the image display unit 50. Note that the image display unit 50 can display not only the image of the passenger 140, but also an image of the whole rear seat that includes the passenger 140.

The image generator 43 may determine whether the generated image is to be displayed as an interrupt image by the image display unit 50, based on a change in a direction of the line of sight of the driver 130 that is detected by the driver's line-of-sight detector 42. For example, during driving in an unfamiliar place, in a situation in which a distance between vehicles is short, or in a situation in which there are many objects of which the driver 130 needs to be alerted to, the attention of the driver 130 can diverge. Thus, the trajectory of the line of sight may be complicated, and the moving range can be enlarged.

When the image generator 43 recognizes that the direction of the line of sight of the driver 130 that is detected by the driver's line-of-sight detector 42 moves in a complicated manner, and/or when the image generator 43 recognizes that the moving range of the line of sight of the driver 130 is enlarged, the image generator 43 may not transmit the generated image to the image display unit 50 so that the driver 130 can focus on driving. The image generator 43 can determine whether the generated image is to be transmitted to the image display unit 50, based on the information that is obtained from the forward image capture unit 15.

When the image generator 43 recognizes that the direction of the line-of-sight of the driver 130 that is detected by the driver's line-of-sight detector 42 is stable, the image generator 43 may transmit the generated image to the image display unit 50. In this manner, the image display unit 50 can display an image that is superimposed with the view of the driver 130. However, in certain conditions, such as the above-described conditions, the image display unit 50 may not display an image that is superimposed with the view of the driver 130.

As a method of detecting a direction of a line of sight for determining whether an image is to be displayed, for example, a method can be used in which pupils are detected, and the direction of the line of sight is detected in real-time from the positions of the pupils and the positions of the eyes (cf. Japanese Unexamined Patent Publication No. 2003-15816, for example).

Additionally or alternatively, another method of detecting a direction of the line of sight can be used. In this method, a normal direction of a plane that includes points on the iris outline is obtained from three-dimensional coordinates of the eye contour, and the center of the iris is obtained at the same time. Then, the method detects, among the normal lines of the plane that includes the points on the iris outline, a line that passes through the center of the iris as a direction of a line of sight (cf. Japanese Unexamined Patent Publication No. 2004-255074, for example).

Additionally or alternatively, another method of detecting the direction of the line of sight can be used. In this method, a three-dimensional position of the center of a face is calculated as a reference position. At the same time, a three-dimensional position of the center point between the center of the left pupil and the center of the right pupil in the lateral direction is calculated as a characteristic position. The method detects the direction of the line of sight based on a shift amount of the characteristic position relative to the reference position (cf. WO 2008/007781, for example). Alternatively or additionally, a method other than the methods that are exemplified herein can be used as a method of detecting the direction of the line of sight.

Note that the situation of driving in an unfamiliar place, the situation in which a distance between vehicles is short, or the situation in which there are many objects of which the driver 130 needs to be alerted to can be determined by another method.

During the situation of driving in an unfamiliar place, the image generator 43 may not transmit the generated image to the image display unit 50 (i.e., the image display unit may not display the image). The determination as to whether the current location is an unfamiliar place can be made by storing location information of the places that have been visited in the past and determining that the current location is a location that has not been visited in the past. Alternatively, the driver 130 may be allowed to select by using a switch whether the current location is an unfamiliar place.

Alternatively or additionally, during the situation in which a distance between vehicles is short, the image generator 43 may not transmit the generated image to the image display unit 50 (i.e., the image display unit may not display the image). The determination as to whether the distance between the vehicles is short can be made by determining whether the distance between the vehicle 120 and the preceding vehicle is greater than a threshold value, as a result that the forward image capture unit 15 of FIG. 1 recognizes the preceding vehicle and that the forward image capture unit 15 measures the distance between the preceding vehicle and the vehicle 120. Note that, instead of measuring a distance by the forward image capture unit 15, a millimeter wave radar or a laser radar can be used for measuring a distance.

Alternatively or additionally, during the situation in which there are many objects of which the driver 130 needs to be alerted to, the image generator 43 may not transmit the generated image to the image display unit 50 (i.e., the image display unit may not display the image). The determination as to whether there are many objects of which the driver 130 needs to be alerted to can be made by determining, as a result that the forward image capture unit 15 recognizes the objects of which the driver 130 needs to be alerted to, such as preceding vehicles and/or pedestrians, whether the number of the objects of which the driver 130 needs to be alerted to during driving of the vehicle 120 is greater than a threshold value.

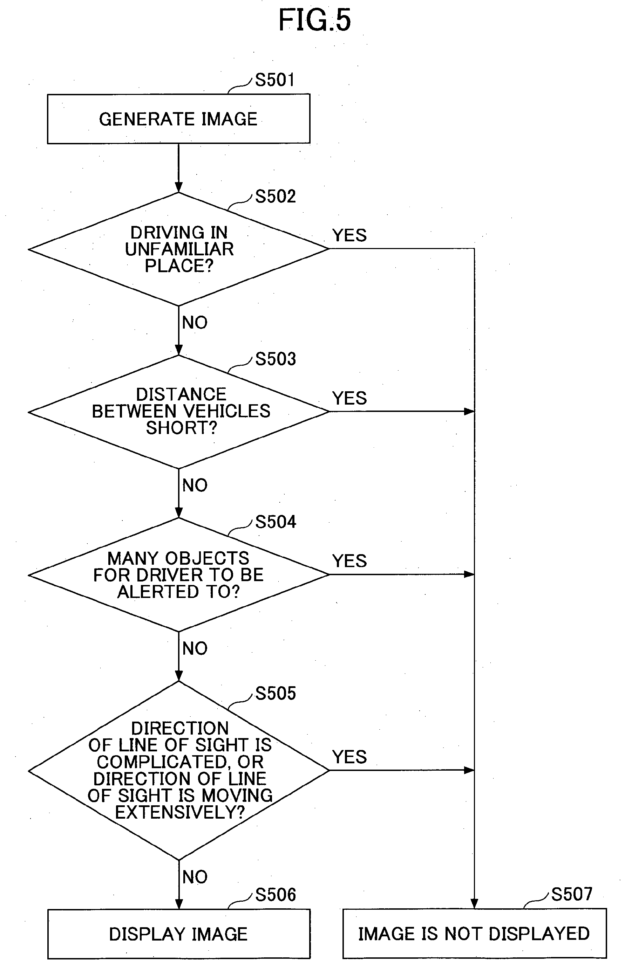

These steps may be combined, and the flow that is shown in FIG. 5, for example, can be utilized. Namely, at step S501, the image generator 43 generates an image. Subsequently, at step S502, the image generator 43 determines whether the driver 130 is driving in an unfamiliar place. When a determination is made at step S502 that the driver 130 is driving in an unfamiliar place, the process proceeds to step S507, and the image generator 43 does not transmit the generated image to the image display unit 50. As a result, the image display unit 50 does not display the image.

When a determination is made at step S502 that the driver 130 is not driving in an unfamiliar place, the process proceeds to step S503, and the image generator 43 determines whether a distance between vehicles is short. Then, when a determination is made at step S503 that the distance between the vehicles is short, the process proceeds to step S507, and the image generator 43 does not transmit the generated image to the image display unit 50. As a result, the image display unit 50 does not display the image.

When a determination is made at step S503 that the distance between the vehicles is not short, the process proceeds to step S504, and the image generator 43 determines whether there are many objects of which the driver 130 needs to be alerted to. Then, when a determination is made at step 504 that there are many objects of which the driver 130 needs to be alerted to, the process proceeds to step S507, and the image generator 43 does not transmit the generated image to the image display unit 50. As a result, the image display unit 50 does not display the image.

When a determination is made at step S504 that there are not so many objects of which the driver 130 needs to be alerted to, the process proceeds to step S505, and the image generator 43 determines whether a direction of a line of sight of the driver 130 is moving in a complicated manner, and the image generator 43 determines whether the direction of the line of sight of the driver is moving extensively. Then, when a determination is made at step S505 that the direction of the line of sight of the drive is moving in a complicated manner, or that the direction of the line of sight of the driver is moving extensively, the process proceeds to step S507, and the image generator 43 does not transmit the generated image to the image display unit 50. As a result, the image display unit 50 does not display the image.

When a determination is made at step S505 that the direction of the line of sight of the driver is not moving in a complicated manner, and that the direction of the line of sight of the driver is not moving extensively, the process proceeds to step S506, and the image generator 43 transmits the generated image to the image display unit 50. As a result, the image display unit 50 displays the image.

Additionally or alternatively, when the image generator 43 recognizes that there is no abnormality in a condition of the passenger 140 (e.g., not being fatigued or not being excited) based on the information from the passenger condition detector 41, the image generator 43 may not transmit the generated image to the image display unit 50. In this case, the image display unit 50 does not display a condition of the passenger 140, and the image display unit 50 can preferentially display information that may be required for driving the vehicle 120, such as vehicle speed or notice. By these features, it is possible to prevent display, by the image display unit 50, of a condition of the passenger 140 from becoming an obstructive factor of safe driving.

The image that is generated by the image generator 43 may be displayed at a position in consideration of the view of the driver 130 that is detected by the driver's line-of-sight detector 42. Namely, when the image that is generated by the image generator 43 is displayed at the center in the direction of the line of sight of the driver 130, it is possible that the image may prevent safe driving by the driver 130. Thus, the image that is generated by the image generator 43 may preferably be displayed at a position that is within the view of the driver 130 and that is separated from the center of the direction of the line of sight of the driver 130. In this manner, safe driving by the driver 130 can be ensured.

Note that the image generator 43 may generate an image that is captured by the passenger image capture unit 20 as it is, and the image generator 43 may transmit the generated image to the image display unit 50. In this case, the text or the like may not be displayed, and only the image of the passenger 140 can be displayed in the view of the driver 130 by the image display unit 50. Alternatively, the image generator 43 may generate an image that only includes the text or the like, and the image generator 43 may transmit the generated image to the image display unit 50. In this case, an image of the passenger 140 may not be displayed, and the image that only includes the text or the like may be displayed in the view of the driver 130 by the image display unit 50.

Namely, an image that is generated by the image generator 43 and that indicates a condition of the passenger 140 may be an image that only includes an image of the passenger 140; an image that only includes text or the like that indicates the condition of the passenger 140; or an image that is obtained by adding the text or or the like that indicates the condition of the passenger 140 to the image of the passenger 140.

An image of the driver 130 that is captured by the driver image capture unit 10 may be displayed by the passenger display 60. The passenger 140 can view the face and body of the driver 130 through the image that is displayed by the passenger display 60. Thus, nervousness of the passenger 140 that is caused by being captured alone can be removed, and the passenger 140 can obtain a sense of security by presence of the driver 130. Additionally, the driver 130 can view the image of the passenger 140 that is superimposed with and displayed in the view of the driver 130, and the passenger 140 can view the image of the driver 130 that is displayed by the passenger display 60. Thus, the driver 130 and the passenger 140 can comfortably communicate with each other while viewing each other's face.

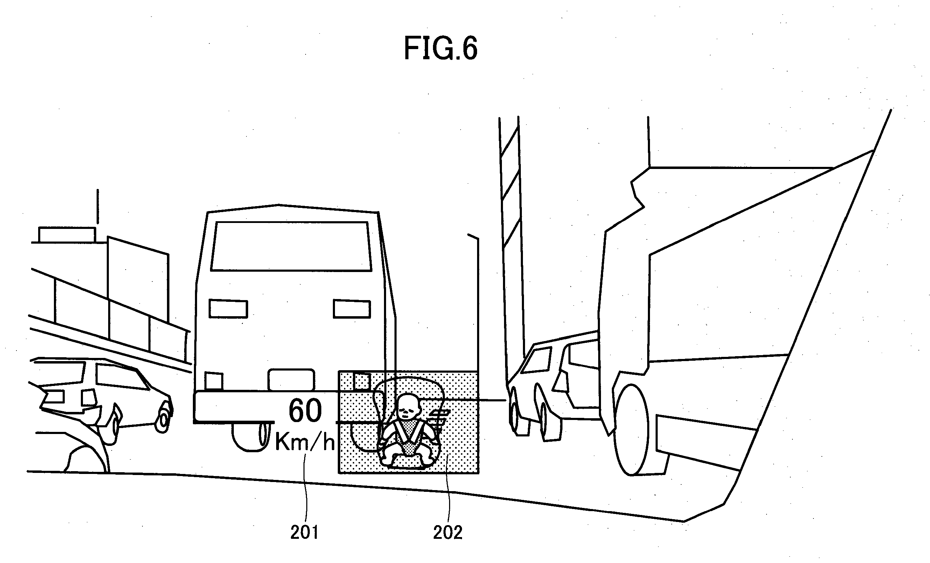

FIG. 6 is a diagram showing an example of an image that is displayed by the display device 1 according to the embodiment. In the example of FIG. 6, in addition to an indication 201 of the vehicle speed, an image 202 of the passenger 140 is displayed in the view of the driver 130. As described above, in addition to or alternatively to the image 202, text or the like that indicates a condition of the passenger 140 may be displayed. Note that, in general, the area in which the image is displayed is arranged at a lower part of the front windshield so that the image does not prevent driving by the driver 130. However, as described above, the area in which the image is displayed may be suitably changed based on the line of sight of the driver 130.

In this manner, the image display device 1 according to the embodiment can display information about the passenger 140 (e.g., an image of the actual face and body of the passenger 140, or text or the like that indicates a condition of the passenger 140) in the front passenger seat or in the rear seat while superimposing the information with a view of the driver 130. With such a configuration, the driver 130 can obtain information about the passenger 140 almost without moving a visual field of the driver 130, namely, almost without lowering the safety. That is, it is possible to achieve both the safe driving of the driver 130, and the smoothness of the communication with the passenger 140.

The display device and the vehicle are explained above by the embodiment. However, the present invention is not limited to the above-described embodiment, and various variations and modifications may be made without departing from the scope of the claims.

For example, the image generator 43 may generate an image, such as the images that are described below. When the image generator 43 recognizes, based on information from the passenger condition detector 41, that a child as a passenger 140 touches a door lock on the vehicle 120, or that the child is standing on the seat, the image generator 43 may generate an image that is obtained by adding text, "danger," to the image of the passenger 140. Additionally, when the image generator 43 recognizes that a physical condition of the child is not good, the image generator 43 may generate an image that is obtained by adding text, "bad physical condition," to the image of the passenger 140. Alternatively, in these cases, the image generator 43 may generate an image that includes text only.

The above-described detection of the condition of the passenger 140 can be executed by image recognition with a camera, such as the passenger image capture unit 20. However, note that the above-described detection of the condition of the passenger 140 can be achieved by various methods, such as a method of detecting an amount of perspiration of a person sitting in the passenger seat by a sweat sensor, or a method of detecting pulse of a person sitting in the passenger seat by a pulse sensor (cf. Japanese Unexamined Patent Publication No. 2014-92965, for example).

The vehicle 120 is not limited to a private vehicle. For example, the vehicle 120 may be a taxi. When the vehicle 120 is a taxi, by displaying a condition of a passenger (i.e., the passenger 140) on the display unit 50, the condition of the passenger can be conveyed to a taxi driver (i.e., the driver 130).

Additionally, the display device 1 may operate, only if the driver 130 instructs the display device 1 to operate. For example, when the driver 130 presses a switch that is provided in the vicinity of a steering wheel, the display device 1 my be activated; the passenger image capture unit 20 may capture an image of the passenger; the image generator 43 may generate a predetermined image; and the predetermined image can be superimposed with and displayed in the view of the driver 130. In other words, only when the driver 130 needs to know a condition of the passenger 140, the display device 1 can be operated.

In the above-described embodiment, an example of the image display unit 50 is shown in which three lasers are used. However, the embodiment is not limited to this. For example, a configuration can be considered such that a single laser is used and a monochrome image is formed. In such a case, the synthetic optical element may not be required.

The present application is based on and claims the benefit of priority of Japanese Patent Application No. 2014-102093 filed on May 16, 2014, and Japanese Patent Application No. 2015-061053 filed on March 24, 2015.

### DESCRIPTION OF THE REFERENCE NUMERALS

10: DRIVER IMAGE CAPTURE UNIT
12: FIRST CAMERA UNIT
12A, 13A: LENS
12B, 13B: IMAGE SENSOR
12C, 13C: SENSOR CONTROLLER
13: SECOND CAMERA UNIT
15: FORWARD IMAGE CAPTURE UNIT
20: PASSENGER IMAGE CAPTURE UNIT
40: IMAGE PROCESSING UNIT
41: PASSENGER CONDITION DETECTOR
42: DRIVER'S LINE-OF-SIGHT DETECTOR
43: IMAGE GENERATOR
50: IMAGE DISPLAY UNIT
51: LIGHT SOURCE
52: OPTICAL DEFLECTOR
53: FIRST MIRROR
54: SCANNED SURFACE
55: SECOND MIRROR
59: SEMI-TRANSPARENT MIRROR
60: PASSENGER DISPLAY
110: VIRTUAL IMAGE
120: VEHICLE
125: FRONT WINDSHIELD
130: DRIVER
135: EYEBALL
140: PASSENGER
201: INDICATION OF VEHICLE SPEED
202: IMAGE OF THE PASSENGER

### [Patent Documents]

Patent Document 1: Japanese Unexamined Patent Publication No. 2003-104132
Patent Document 2: Japanese Unexamined Patent Publication No. 2003-237466

## Claims

1. A display device (1) comprising:
a passenger image capture unit (20) configured to capture information of a passenger who is riding in a vehicle (120) together with a driver of the vehicle (120);
an image generator (43) configured to generate an image that shows a condition of the passenger based on the information that is captured by the passenger image capture unit (20);
a heads-up display (50) configured to superimpose the image with a lower part of a windshield, and configured to display the image in the lower part of the windshield;
a driver image capture unit configured to capture information of the driver; and
a driver's line-of-sight detector (42) configured to detect a direction of the line of sight of the driver based on the information that is captured by the driver image capturing unit;
wherein the image generator (43) is configured to generate the image based on the information captured by the passenger image capture unit (20); and
wherein, in response to detecting that the direction of the line of sight of the driver is stable based on the driver's line-of-sight detector, the image generator is configured to cause the heads-up display (50) to display the image at a positon that is separated from a center of the direction of the line of sight of the driver and within the view of the driver.

2. The display device (1) according to claim 1,
further comprising a passenger condition detector (41) configured to detect the condition of the passenger based on the information that is captured by the passenger image capture unit (20).

3. The display device (1) according to claim 1 or claim 2,
wherein the image includes text that is generated based on the information that is obtained from the passenger condition detector (41).

4. The display device (1) according to any preceding claim,
wherein the passenger image capture unit (20) has an angle of view that is wider than that of the driver image capture unit (10).

5. The display device (1) according to claim 4,
wherein the passenger is in a rear seat of the vehicle (120), and wherein the passenger image capture unit (20) is configured to capture an image of a whole of the rear seat that includes the passenger.

6. The display device (1) according to any preceding claim, further comprising:
a passenger display (60),
wherein the display device (1) is configured to display an image that is captured by the driver image capture unit (10) on the passenger display (60).

7. The display device (1) according to any preceding claim,
wherein the heads-up display (50) is configured not to display the image that is superimposed with the visual field of the driver under a predetermined condition.

8. The display device (1) according to claim 7,
wherein, in response to detecting that the direction of the line of sight of the driver is not stable based on the driver's line-of-sight detector, the heads-up display (50) is configured not to display the image that is superimposed with the visual field of the driver.

9. The display device (1) according to claim 8, further comprising:
a distance measurement unit configured to measure a distance between the vehicle (120) and another vehicle in front of the vehicle (120),
wherein, in response to determining that the distance from a distance measurement result by the distance measurement unit is lower than a threshold value, the heads-up display (50) is configured to avoid displaying the image that is superimposed with the visual field of the driver.

10. The display device (1) according to any one of claims 1 to 9, wherein the heads-up display (50) includes a laser light source, and an optical deflector (52) configured to deflect a laser light beam that is emitted from the laser light source.

11. The display device according to claim 2, or any claim dependent on claim 2,
wherein the image generator (43) is configured to generate the image in further dependence on the information captured by the passenger condition detector (41); and
the passenger condition detector (41) is configured to receive, from the passenger image capture unit (20), information obtained by the passenger image capture unit (20), and to detect the condition of the passenger by detecting a degree of fatigue of the passenger by comparing a blinking time of the passenger with a normal blinking time based on the information captured by the passenger image capture unit (20), wherein the blinking time of the passenger is determined by recognizing the face of the passenger and extracting images corresponding to the areas of the eyes.

12. A vehicle (120) comprising:
the display device (1) according to any one of claims 1 to 11.

## Patentansprüche

1. Anzeigevorrichtung (1), die Folgendes umfasst:
eine Mitfahrerbilderfassungseinheit (20), die dafür konfiguriert ist, Informationen eines Mitfahrers zu erfassen, der in einem Fahrzeug (120) zusammen mit einem Fahrer des Fahrzeugs (120) fährt;
einen Bildgenerator (43), der dafür konfiguriert ist, ein Bild zu erzeugen, das einen Zustand des Mitfahrers basierend auf den Informationen zeigt, die von der Mitfahrerbilderfassungseinheit (20) erfasst werden;
eine Heads-up-Anzeige (50), die dafür konfiguriert ist, das Bild mit einem unteren Teil einer Windschutzscheibe zu überlagern, und die dafür konfiguriert ist, das Bild im unteren Teil der Windschutzscheibe anzuzeigen;
eine Treiberbilderfassungseinheit, die dafür konfiguriert ist, Informationen des Treibers zu erfassen; und
einen Sichtlinien-Detektor (42) des Fahrers, der dafür konfiguriert ist, eine Richtung der Sichtlinie des Fahrers basierend auf den Informationen zu erfassen, die von der Fahrerbilderfassungseinheit erfasst werden;
wobei der Bildgenerator (43) dafür konfiguriert ist, das Bild basierend auf den von der Mitfahrerbilderfassungseinheit (20) erfassten Informationen zu erzeugen; und
wobei als Reaktion auf das Erfassen, dass die Richtung der Sichtlinie des Fahrers basierend auf dem Sichtlinien-Detektor des Fahrers stabil ist, der Bildgenerator dafür konfiguriert ist, dass die Heads-up-Anzeige (50) das Bild an einer Position anzeigt, die von einer Mitte der Richtung der Sichtlinie des Fahrers getrennt ist und im Sichtfeld des Fahrers liegt.

2. Anzeigevorrichtung (1) nach Anspruch 1,
die ferner einen Mitfahrerzustandsdetektor (41) umfasst, der dafür konfiguriert ist, den Zustand des Mitfahrers basierend auf den Informationen zu erfassen, die von der Mitfahrerbilderfassungseinheit (20) erfasst werden.

3. Anzeigevorrichtung (1) nach Anspruch 1 oder Anspruch 2,
wobei das Bild Text enthält, der basierend auf den Informationen erzeugt wird, die vom Mitfahrerzustandsdetektor (41) erhalten werden.

4. Anzeigevorrichtung (1) nach einem vorhergehenden der Ansprüche,
wobei die Mitfahrerbilderfassungseinheit (20) einen Blickwinkel aufweist, der breiter als der der Fahrerbilderfassungseinheit (10) ist.

5. Anzeigevorrichtung (1) nach Anspruch 4,
wobei sich der Mitfahrer auf einem Rücksitz des Fahrzeugs (120) befindet und
wobei die Mitfahrerbilderfassungseinheit (20) dafür konfiguriert ist, ein Bild eines gesamten Rücksitzes zu erfassen, der den Mitfahrer umfasst.

6. Anzeigevorrichtung (1) nach einem der vorhergehenden Ansprüche, die ferner Folgendes umfasst:
eine Mitfahreranzeige (60),
wobei die Anzeigevorrichtung (1) dafür konfiguriert ist, ein Bild anzuzeigen, das von der Fahrerbilderfassungseinheit (10) auf der Mitfahreranzeige (60) erfasst wird.

7. Anzeigevorrichtung (1) nach einem vorhergehenden der Ansprüche,
wobei die Heads-up-Anzeige (50) dafür konfiguriert ist, das Bild, das dem Gesichtsfeld des Fahrers überlagert ist, unter einer vorbestimmten Bedingung nicht anzuzeigen.

8. Anzeigevorrichtung (1) nach Anspruch 7,
wobei als Reaktion auf das Erfassen, dass die Richtung der Sichtlinie des Fahrers basierend auf dem Sichtlinien-Detektor des Fahrers nicht stabil ist, das Heads-up-Display (50) dafür konfiguriert ist, das Bild, das dem Gesichtsfeld des Fahrers überlagert ist, nicht anzuzeigen.

9. Anzeigevorrichtung (1) nach Anspruch 8, die ferner Folgendes umfasst:
eine Entfernungsmesseinheit, die dafür konfiguriert ist, eine Entfernung zwischen dem Fahrzeug (120) und einem anderen Fahrzeug vor dem Fahrzeug (120) zu messen,
wobei als Reaktion auf das Bestimmen, dass die Entfernung von einem Entfernungsmessungsergebnis durch die Entfernungsmesseinheit niedriger als ein Schwellenwert ist, die Heads-up-Anzeige (50) dafür konfiguriert ist, das Bild, das dem Gesichtsfeld des Fahrers überlagert ist, nicht anzuzeigen.

10. Anzeigevorrichtung (1) nach einem der Ansprüche 1 bis 9,
wobei die Heads-up-Anzeige (50) eine Laserlichtquelle und einen optischen Ablenker (52) umfasst, der dafür konfiguriert ist, einen Laserlichtstrahl abzulenken, der von der Laserlichtquelle emittiert wird.

11. Anzeigevorrichtung nach Anspruch 2 oder jedem Anspruch, der von Anspruch 2 abhängt,
wobei der Bildgenerator (43) dafür konfiguriert ist, das Bild in weiterer Abhängigkeit von den vom Mitfahrerzustandsdetektor (41) erfassten Informationen zu erzeugen; und
der Mitfahrerzustandsdetektor (41) für Folgendes konfiguriert ist: Erhalten, von der Mitfahrerbilderfassungseinheit (20), von Informationen, die von der Mitfahrerbilderfassungseinheit (20) erlangt wurden, und Erfassen des Zustands des Mitfahrers durch Erfassen eines Ermüdungsgrades des Mitfahrers durch Vergleichen einer Augenzwinkerzeit des Mitfahrers mit einer normalen Augenzwinkerzeit basierend auf den von der Mitfahrerbilderfassungseinheit (20) erfassten Informationen, wobei die Augenzwinkerzeit des Mitfahrers bestimmt wird, indem das Gesicht des Mitfahrers erkannt und Bilder extrahiert werden, die den Augenbereichen entsprechen.

12. Fahrzeug (120), das Folgendes umfasst:
die Anzeigevorrichtung (1) nach einem der Ansprüche 1 bis 11.

## Revendications

1. Dispositif d'affichage (1) comprenant :
une unité de capture d'image de passager (20) configurée pour capturer des informations d'un passager qui voyage dans un véhicule (120) avec un conducteur du véhicule (120) ;
un générateur d'image (43) configuré pour générer une image qui montre un état du passager sur la base des informations qui sont capturées par l'unité de capture d'image de passager (20) ;
un afficheur frontal (50) configuré pour superposer l'image avec une partie inférieure d'un pare-brise, et configuré pour afficher l'image dans la partie inférieure du pare-brise ;
une unité de capture d'image de conducteur configurée pour capturer des informations du conducteur ; et
un détecteur de ligne visuelle (42) du conducteur configuré pour détecter une direction de la ligne visuelle du conducteur sur la base des informations qui sont capturées par l'unité de capture d'image de conducteur ;
dans lequel le générateur d'image (43) est configuré pour générer l'image sur la base des informations capturées par l'unité de capture d'image de passager (20) ; et
dans lequel, en réponse à la détection du fait que la direction de la ligne visuelle du conducteur est stable sur la base du détecteur de ligne visuelle du conducteur, le générateur d'image est configuré pour amener l'afficheur frontal (50) à afficher l'image à une position qui est séparée d'un centre de la direction de la ligne visuelle du conducteur et à la vue du conducteur.

2. Dispositif d'affichage (1) selon la revendication 1,
comprenant en outre un détecteur d'état de passager (41) configuré pour détecter l'état du passager sur la base des informations qui sont capturées par l'unité de capture d'image de passager (20).

3. Dispositif d'affichage (1) selon la revendication 1 ou la revendication 2,
dans lequel l'image comporte du texte qui est généré sur la base des informations qui sont obtenues auprès du détecteur d'état de passager (41).

4. Dispositif d'affichage (1) selon l'une quelconque des revendications précédentes,
dans lequel l'unité de capture d'image de passager (20) a un angle de vue qui est plus large que celui de l'unité de capture d'image de conducteur (10).

5. Dispositif d'affichage (1) selon la revendication 4,
dans lequel le passager est dans un siège arrière du véhicule (120), et
dans lequel l'unité de capture d'image de passager (20) est configurée pour capturer une image d'une intégralité du siège arrière qui comporte le passager.

6. Dispositif d'affichage (1) selon l'une quelconque des revendications précédentes, comprenant en outre :
un afficheur passager (60),
dans lequel le dispositif d'affichage (1) est configuré pour afficher une image qui est capturée par l'unité de capture d'image de conducteur (10) sur l'afficheur passager (60).

7. Dispositif d'affichage (1) selon l'une quelconque des revendications précédentes,
dans lequel l'afficheur frontal (50) est configuré pour ne pas afficher l'image qui est superposée avec le champ visuel du conducteur dans une condition prédéterminée.

8. Dispositif d'affichage (1) selon la revendication 7,
dans lequel, en réponse à la détection du fait que la direction de la ligne visuelle du conducteur n'est pas stable sur la base du détecteur de ligne visuelle du conducteur, l'afficheur frontal (50) est configuré pour ne pas afficher l'image qui est superposée avec le champ visuel du conducteur.

9. Dispositif d'affichage (1) selon la revendication 8, comprenant en outre :
une unité de mesure de distance configurée pour mesurer une distance entre le véhicule (120) et un autre véhicule devant le véhicule (120),
dans lequel, en réponse à la détermination du fait que la distance à partir d'un résultat de mesure de distance par l'unité de mesure de distance est inférieure à une valeur seuil, l'afficheur frontal (50) est configuré pour éviter d'afficher l'image qui est superposée avec le champ visuel du conducteur.

10. Dispositif d'affichage (1) selon l'une quelconque des revendications 1 à 9, dans lequel l'afficheur frontal (50) comporte une source de lumière laser, et un déflecteur optique (52) configuré pour dévier un faisceau de lumière laser qui est émis depuis la source de lumière laser.

11. Dispositif d'affichage selon la revendication 2, ou toute revendication dépendante de la revendication 2,
dans lequel le générateur d'image (43) est configuré pour générer l'image avec davantage de dépendance aux informations capturées par le détecteur d'état de passager (41) ; et
le détecteur d'état de passager (41) est configuré pour recevoir, depuis l'unité de capture d'image de passager (20), des informations obtenues par l'unité de capture d'image de passager (20), et pour détecter l'état du passager en détectant un degré de fatigue du passager en comparant un temps de clignement du passager à un temps de clignement normal sur la base des informations capturées par l'unité de capture d'image de passager (20), dans lequel le temps de clignement du passager est déterminé par reconnaissance du visage du passager et extraction d'images correspondant aux régions des yeux.

12. Véhicule (120) comprenant :
le dispositif d'affichage (1) selon l'une quelconque des revendications 1 à 11.
